# EUROPÄISCHE PATENTSCHRIFT

(11) **EP 3 268 223 B1**
(45) Veröffentlichungstag und Bekanntmachung des Hinweises auf die Patenterteilung: **12.12.2018**
(21) Anmeldenummer: 16708425.0
(22) Anmeldetag: 08.03.2016
(51) Int. Cl.: B41F 13/08, F16C 13/00

(54) **DRUCKWALZE; INSBESONDERE FLEXODRUCK-WALZE**
IMPRESSION ROLL; IN PARTICULAR FLEXOGRAPHIC IMPRESSION ROLL
ROULEAU D'IMPRESSION, EN PARTICULIER ROULEAU D'IMPRESSION FLEXOGRAPHIQUE

(30) Priorität: 12.03.2015 DE 102015204496
(43) Veröffentlichungstag der Anmeldung: 17.01.2018
(73) Patentinhaber: Gottfried Wilhelm Leibniz Universität Hannover, 30167 Hannover (DE)
(72) Erfinder: SCHOENHERR, Marcus, 22851 Norderstedt (DE); ECKL, Martin, 67574 Osthofen (DE); LITWINSKI, Kai Martin, 30161 Hannover (DE); DENKENA, Berend, 30900 Wedemark Hannover (DE)
(74) Vertreter: Lins, Martina
(86) Internationale Anmeldenummer: PCT/EP2016/054931
(87) Internationale Veröffentlichungsnummer: WO 2016/142387

(56) Entgegenhaltungen:
- EP-A1- 0 519 301
- DE-A1- 2 926 765
- DE-A1-102009 055 767

## Beschreibung

Die Erfindung betrifft eine Druckwalze, insbesondere eine Flexodruck-Druckwalze mit (a) einer hohlen Außenwalze, die eine Längsachse besitzt und (b) einer in der Außenwalze angeordneten Vorspannvorrichtung zum Ausüben einer Vorspannkraft, die eine radial auswärts gerichtete Kraftkomponente besitzt.

Derartige Druckwalzen sind aus der DE 29 26 765 A1 bekannt und werden in Druckmaschinen zum Drucken eingesetzt. Der Druckprozess erfolgt, indem mehrere Walzen aufeinander abrollen. Je nach Druckverfahren gibt es je eine Walze, die das Druckmotiv, die Farbe bzw. das Druckmedium trägt. Im Druckprozess wird die Farbe gemäß dem Druckmotiv auf das Medium übertragen. Das Druckmotiv ist in der Regel ein aus Polymer hergestelltes Element mit Unebenheiten, die je nach Druckverfahren dem Negativ oder Positiv der zu druckenden Abbildung entsprechen.

In der DE 603 06 415 T2 wird ein Rohr beschrieben, das aus einem Außenrohr, einem Innenrohr sowie dazwischen angeordneten Distanzhaltern aus Karbon besteht. Durch diese Anordnung wird eine besonders hohe Steifheit erreicht, was dazu führt, dass die im Falle von drehenden Maschinen erzeugten Störvibrationen reduziert werden. Zur weiteren Versteifung kann ein Harz in die Zwischenräume um die Distanzhalter eingebracht werden, um diese einzubetten, die Zwischenräume auszufüllen und die beiden Rohre drehfest miteinander zu verbinden, so dass wunschgemäß keine Scherwirkungen auftreten. Das so vorgeschlagene Prinzip zur Schwingungsreduzierung ist durch die Nutzung und Verarbeitung von Karbon aufwendig und teuer.

In der DE 10 2010 015 108 A1 ist ein Rotationszylinder für eine Verarbeitungsmaschine beschrieben, der aus einem Außenrohr, einem Innenrohr oder Vollkörper sowie einer dazwischen angeordneten Tragwerkskonstruktion besteht. Die Tragwerkskonstruktion ist aus Stabilitätsgründen formstabil ausgebildet und kraft- und/oder formschlüssig mit dem Außenrohr und dem Innenrohr beziehungsweise dem Vollkörper verbunden. Der so erhaltenen Rotationszylinder ist dadurch ohne Beeinträchtigung der Stabilität leichter, die Tragwerkkonstruktion ist in der Herstellung und Montage jedoch aufwendig.

In der DE 29 22 585 B1 ist ein Schwingungsabsorber für Resonanzschwingungen rotierender Körper beschrieben. Der Schwingungsabsorber weist mehrere übereinander gestapelte Platten sowie zwischen den Platten angeordnete Zwischenlagen aus einem Dämpfungsmaterial auf. Das Dämpfungsmaterial der Zwischenlagen ist bezüglich seiner Shore-Härte derart ausgewählt, dass sämtliche Platten mit einer zu dämpfenden Resonanzfrequenz eines rotierenden Körpers schwingen, wodurch die einzelnen Platten gegeneinander schwingen und dabei das Dämpfungsmaterial der Zwischenlagen komprimieren und entspannen. Ein derartiger Schwingungsabsorber muss speziell zur Dämpfung einer Resonanzfrequenz eines ausgewählten Körpers gestaltet werden. Die Anwendung an anderen Körpern, deren Resonanzschwingungen reduziert werden sollen, bedarf einer vorhergehenden sorgfältigen sowie aufwendigen Auslegung des Schwingungsabsorbers.

Druckwalzen können vereinfacht als lange, dünnwandige, in der Regel außen gelagerte Hohlzylinder betrachtet werden. Diese Druckwalzen sind anfällig gegen Biegeschwingungen. Durch die Unebenheiten im Druckmotiv werden bei hohen Druckgeschwindigkeiten die Druckwalzen breitbandig angeregt und beginnen zu schwingen. Diese Schwingungen können zu einem Kontaktverlust zwischen den Walzen und damit zu Druckaussetzern führen.

Um möglichst hohe Druckgeschwindigkeiten zu erreichen, ist es daher wünschenswert, die Biegeschwingungen weitestgehend zu unterdrücken.

Der Erfindung liegt die Aufgabe zu Grunde, die Neigung von Druckwalzen zu Biegeschwingungen zu vermindern.

Die Erfindung löst das Problem durch eine gattungsgemäße Druckwalze, die zumindest zwei Segmente aufweist, die sich entlang der Längsachse erstrecken und untereinander in Umfangsrichtung so entkoppelt sind, dass eine Biegeschwingung der Druckwalze zu einer Scherbewegung zwischen der Außenwalze und den Segmenten führt, wobei die zumindest zwei Segmente so mit der Außenwalze verbunden sind, dass diese Scherbewegung zu einer die Biegeschwingung dämpfenden Kraft führt, wobei die Vorspannvorrichtung angeordnet ist zum Ausüben der Vorspannkraft auf die Segmente.

Vorteilhaft an der Erfindung ist, dass Biegeschwingungen effektiv gedämpft werden können. Durch den mittelbaren oder unmittelbaren Kontakt zwischen den Segmenten und der Außenwalze kommt es zu einer Reibkraft, die eine Scherbewegung von Außenwalze und Segment relativ zueinander in Wärme umsetzt. Je größer die Reibkraft zwischen der Außenwalze und den Segmenten ist, desto stärker wird die Biegeschwingung gedämpft. Wird diese Kraft jedoch zu groß, kommt es zu keiner Relativbewegung zwischen den Segmenten und der Außenwalze mehr. Durch die Vorspannvorrichtung kann die Kraft, mit der die Segmente gegen die Außenwalze gedrückt werden, so eingestellt werden, dass die maximale Dämpfungswirkung erreicht wird.

Es ist ein weiterer Vorteil der Erfindung, dass die Druckwalze vergleichsweise einfach aufgebaut ist. Das macht sie einfach herzustellen und robust. Zudem sind zusätzliche Lager entbehrlich, sodass die erfindungsgemäße Druckwalze leicht in bestehende Druckmaschinen eingebaut werden kann.

Im Rahmen der vorliegenden Beschreibung wird unter der Außenwalze der Teil der Druckwalze verstanden, der die Druckvorlage trägt. Es ist möglich, nicht aber notwendig, dass die Außenwalze einen Gummizylinder oder eine Foto-Polymer-Platte umfasst.

Bei der Druckwalze kann es sich um ein Druckformzylinder, ein Gegendruckzylinder, eine Rasterwalze und/oder eine Tauchwalze handeln. Besonders vorteilhaft ist die Erfindung, wenn es sich bei der Druckwalze um den Druckformzylinder handelt.

Unter dem Merkmal, dass die zwei Segmente untereinander in Umfangsrichtung entkoppelt sind, wird insbesondere verstanden, dass eine Federkonstante für eine Relativbewegung zweier Segmente in Umfangsrichtung zueinander höchstens ein Zehntel der Federkonstanten einer Bewegung der beiden Enden der Segmente gegeneinander beträgt. Vollständige Entkopplung ist selbstverständlich nicht möglich. Maßgeblich ist, dass die Kopplung zweier benachbarter Segmente bezüglich einer Bewegung in Umfangsrichtung aufeinander zu oder voneinander weg deutlich schwächer ist als die Kopplung von zwei Enden der Segmente entlang der Längsachse. Auf diese Weise führt eine Biegeschwingung der Druckwalze zu einer besonders starken Scherbewegung zwischen den Segmenten und der Außenwalze.

Es ist möglich und stellt eine bevorzugte Ausführungsform dar, dass sich die Segmente von einem axialen Ende der Außenwalze zum gegenüber liegenden Ende erstrecken. Es ist möglich, dass die Segmente aus Teil-Segmenten aufgebaut sind, die miteinander verbunden sind. Dies ist aber weniger günstig, wenn die Verbindungsstelle zu einer Schwächung der Verbindung führt.

Unter der Vorspannvorrichtung ist insbesondere eine Vorrichtung zu verstehen, mittels bewirkbar ist, dass die Segmente eine Kraft auf die Außenwalze ausüben, die zu der dämpfenden Kraft führt. Es ist möglich und stellt eine bevorzugten Ausführungsform dar, dass die Segmente magnetisch sind und die Außenwalze ferromagnetisch. In diesem Fall sind die Vorspannvorrichtung und die Segmente die gleichen Objekte.

Vorzugsweise sind die Segmente aus Metall, beispielsweise aus Stahl.

Günstig ist es, wenn die Außenwalze und die Segmente unmittelbar miteinander in Kontakt stehen, sodass eine Biegeschwingung zu einer Reibbewegung der Segmente an einer Innenseite der Außenwalze führt. Alternativ ist es aber auch möglich, dass die Segmente und die Außenwalze über ein dünnes, elastisches Element verbunden sind, solange sichergestellt ist, dass eine Biegeschwingung der Druckwalze zu einer hinreichend großen Scherkraft innerhalb dieses Elements führt.

Vorzugsweise sind die Segmente Teile einer geschlitzten Hülse. Besonders günstig ist es dabei, wenn die Hülse Schlitze aufweist, die zumindest im Wesentlichen parallel zur Längsachse der Außenwalze verlaufen. Hierunter ist insbesondere zu verstehen, dass es zwar möglich und wünschenswert ist, dass die Schlitze parallel zur Längsachse der Außenwalze verlaufen, dass es aber auch möglich ist, dass diese unter einem Winkel dazu verlaufen. Beispielsweise beträgt der Winkel weniger als 5°. Es ist zudem möglich, dass die Schlitze nicht geradlinig verlaufen, sondern beispielsweise geschwungen. Allerdings sind derartige Schlitze schwerer herzustellen und können zu einer geringeren Steifigkeit bezüglich einer axialen Streckung der Segmente führen.

Besonders günstig ist es, wenn die Segmente an einer Innenoberfläche der Außenwalze direkt anliegen. In diesem Fall kommt es zu einer unmittelbaren Reibung der Segmente und der Außenwalze aneinander. Besonders günstig ist es, wenn die Außenwalze an der Stelle, an der sie in Kontakt mit den Segmenten steht, aus Metall aufgebaut ist. Metall-Metallreibverbindungen führen zu einer großen Biegeschwingung der befindenden Kraft.

Günstig ist es, wenn die Vorspannvorrichtung Hydrodehnkissen und/oder Magneten aufweist. Hydrodehnkissen sind einfach aufgebaut und können große Drücke aufbringen.

Vorzugsweise erstrecken sich die Segmente über zumindest 80% einer axialen Länge der Außenwalze. So wird erreicht, dass eine Biegeschwingung zu einer besonders großen Scherbewegung zwischen Segmenten und der Außenwalze führt, sodass die resultierende Kraft die Biegeschwingung besonders effizient dämpft.

Erfindungsgemäß ist zudem eine Flexodruckmaschine mit einer erfindungsgemäßen Druckwalze. Beim Flexodruck werden relativ schlanke Druckwalzen eingesetzt, die zu Biegeschwingungen neigen, sodass die Erfindung mit besonderem Vorteil eingesetzt werden kann..

Im Folgenden wird die Erfindung anhand der beigefügten Zeichnungen näher erläutert. Dabei zeigt:
- Figur 1a: eine perspektivische Ansicht und einen Querschnitt durch eine erste Druckwalze gemäß der vorliegenden Erfindung,
- Figur 1b: eine perspektivische Ansicht und einen Querschnitt durch eine zweite Druckwalze gemäß der vorliegenden Erfindung
- Figur 1c: eine perspektivische Ansicht und einen Querschnitt durch eine zweite Druckwalze gemäß der vorliegenden Erfindung,
- Figur 2a: einen Längsschnitt durch eine erfindungsgemäße Druckwalze im lastfreien Zustand,
- Figur 2b: die Druckwalze gemäß Figur 2a unter Last,
- Figur 3a: ein Vergleich der theoretisch erreichbaren Systemdämpfung einerseits mit erfindungsgemäßen Segmenten andererseits ohne diese Segmente und
- Figur 3b: die Frequenzgänge zwischen einer erfindungsgemäßen Druckwalze und einer herkömmlichen Druckwalze.

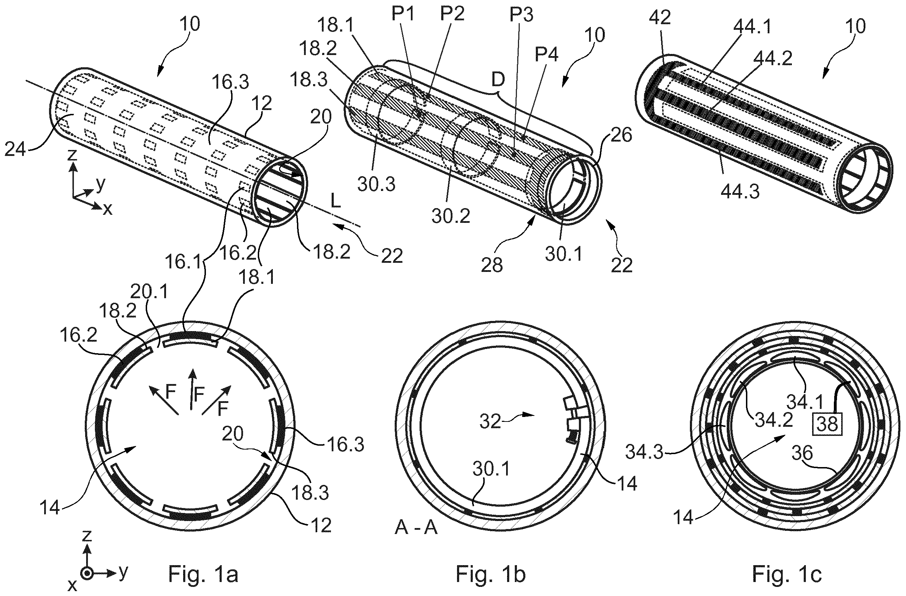

Figur 1 zeigt eine erfindungsgemäße Druckwalze 10, die eine hohle Außenwalze 12 aufweist, die eine Längsachse L₁₂ hat. In der Außenwalze 12 ist eine Vorspannvorrichtung 14 angeordnet, die eine Mehrzahl an Permanentmagneten 16.1, 16.2, ... umfasst. Mittels der Permanentmagnete werden Segmente 18.1, 18.2, ... von innen gegen eine Innenoberfläche 20 der Außenwalze 12 gedrückt.

Auf diese Weise übt die Vorspannvorrichtung 14 eine Vorspannkraft F auf die Segmente 18 aus, wobei die Vorspannkraft F auswärts gerichtet ist.

Die Segmente 18 erstrecken sich, wie der oberen Teilfigur zu entnehmen ist, entlang der Längsachse L der Außenwalze 12. Zwischen zwei Segmenten, beispielsweise den Segmenten 18.1 und 18.2, ist ein Schlitz 22.1 eingeordnet. Dadurch sind benachbarte Segmente mechanisch voneinander entkoppelt. Sofern also die Vorspannkraft F die Segmente 18 nicht gegen die Außenwalze drückt, benötigt es nur einer kleinen Kraft, um Segmente in Umfangsrichtung aufeinander zuzubewegen. Es bedarf hingegen einer deutlich größeren Kraft, insbesondere einer um den Faktor 10 oder mehr, um ein erstes Ende 22 um einen gleichen Betrag gegenüber einem zweiten Ende 24 auszulenken, wobei das zweite Ende 24 bezüglich der Längsachse L₁₂ gegenüber dem ersten Ende 22 liegt.

Figur 1b zeigt eine relative Ausführungsform einer erfindungsgemäßen Druckwalze 10 mit der axialen Länge D, bei der die Segmente 18 Teil einer geschlitzten Hülse 26 sind. So laufen die Segmente 18.i (i=1, 2, 3, ...) am ersten Ende 22 in einem Fußbereich 28 zusammen. Im Fußbereich 28 existieren entsprechend keine Segmente. Die Kopplung benachbarter Segmente ist umso stärker, je geringer der Abstand der Punkte auf benachbarten Segmenten zum Fußbereich 28 ist, bezüglich dem die Kopplung betrachtet wird. So ist die Kopplung der benachbarten Segmente 18.1, 18.2 bezüglich der Punkte P1 und P2, die einen großen Abstand zum Fußbereich 28 haben, stärker als die Kopplung bezüglich der Punkte P3 und P4, die einen kleinen Abstand zum Fußbereich 28 haben.

Die Vorspannvorrichtung 14 umfasst in der Ausbildungsform gemäß Figur 1b Spannringe 30.1, 30.2, 30.3. Wie das untere Teilbild zeigt, umfasst der Spannring 30.1 eine Spanneinrichtung 32, beispielsweise in Form einer Spannschraube. Gemäß der Spannschraube kann der Spannring 30.1 aufgeweitet werden, sodass die Vorspannkraft F variiert werden kann. Die andere Spannringe 30.2, 30.3 sind gleich aufgebaut.

Figur 1c zeigt eine weitere Ausführungsform einer erfindungsgemäßen Druckwalze 10, bei der die Vorspannvorrichtung 14 Hydrodehnkissen 34.1, 34.2, ... aufweist, die sich auf einem Innenzylinder 36 abstützen und von einer schematisch eingezeichneten Druckquelle 38 mit Druckflüssigkeit beaufschlagt werden.

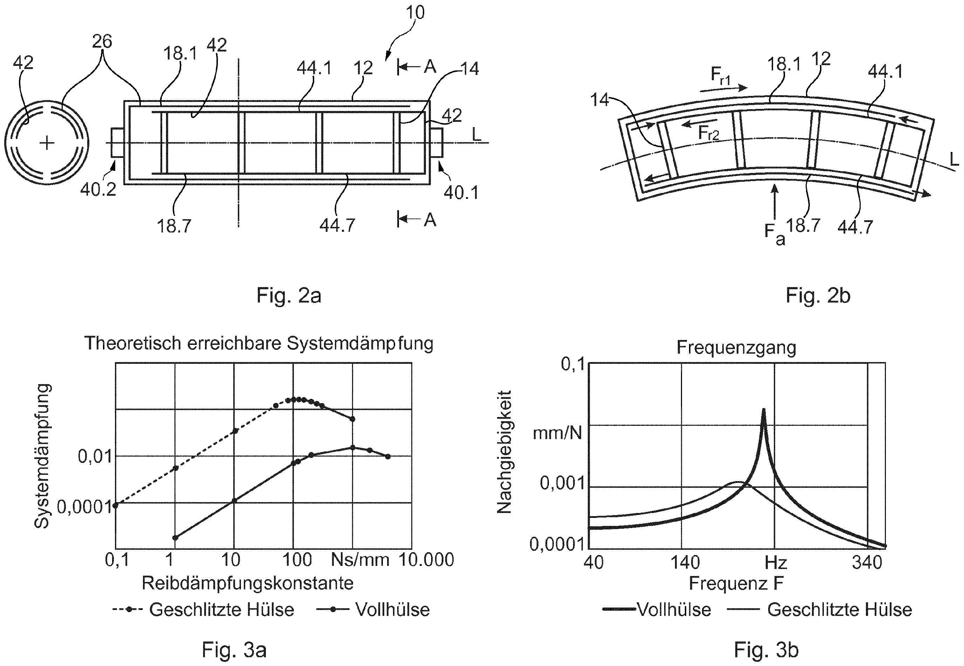

Die Druckwalze 10 umfasst weitere Segmente in Form von Stützsegmenten 44.1, 44.2,..., von denen im Querschnitt gemäß Figur 2a die Stützsegmente 44.1 und 44.7 zu sehen sind. Die Stützsegmente 44.i sind Teil einer zweiten Hülse 42. Die Vorspannvorrichtung 14 ist so angeordnet, dass sie die Stützsegmente 44.i nach radial außen gegen die Segmente 18 drückt. Dazu ist die zweite Hülse 42 konzentrisch zur Hülse 26 und innerhalb dieser angeordnet.

Figur 2a zeigt schematisch die erfindungsgemäße Druckwalze 10 gemäß Figur 1c mit der Außenwalze 12, Segmenten 18.1, 18.7 und der Vorspannvorrichtung 14. Figur 1c zeigt im unteren Teilbild einen Schnitt gemäß der Linie A-A aus Figur 2a. Die Druckwalze 10 ist in zwei schematisch eingezeichneten Lagern 40.1, 40.2 drehbar gelagert. Figur 2a zeigt den Fall, dass auf die Druckwalze 10 keine externe Kraft wirkt.

Figur 2b zeigt einen Fall, dass eine Auslenkkraft Fₐ bezüglich der Längsachse L zentrisch auf die Außenwalze 12 wirkt. Die Druckwalze 10 biegt sich dadurch durch. Die Biegung ist übertrieben dargestellt. Es kommt durch diese Biegung zu einer Scherbewegung der Segmente 18.i relativ zur Außenwalze 12. Zudem bewegen sich die Stützsegmente 44.i relativ zu den Segmenten 18.i und ggf. auch zur Außenwalze 12. Es kommt dadurch zu einer Reibkraft F_{r,1}, die auf die äußere Oberfläche der Segmente 18.i wirkt. Diese Reibkraft F_{r,1} bewirkt eine Kraft, die der Auslenkkraft Fₐ entgegen wirkt.

Zudem entsteht zwischen den Stützsegmenten 44.i und den Segmenten 18.i eine zweite Reibkraft F_{r,2} die ebenfalls zu einer Kraft führt, die der Auslenkkraft Fₐ entgegen gesetzt ist. Durch die Scherbewegung der Segmente 18.i gegenüber der Außenwalze 12 hervorgerufenen Wärme, wird Energie der Schwingung der Druckwalze 10 entzogen, sodass die Biegeschwingung gedämpft wird.

Es sei darauf hingewiesen, dass nur der Einfachheit halber gleiche Zählindex i verwendet wurde, selbstverständlich ist es möglich, nicht aber notwendig, dass Stützsegmente mit unterschiedlichem Zählsuffix aneinander reiben. Insbesondere ist es möglich, dass sich die Zahl der Segmente von der Zahl der Stützsegmente unterscheidet.

Figur 3a zeigt die berechnete, theoretisch erreichbare Systemdämpfung in relativen Einheiten über der Reibdämpfungskonstante der Gleitreibung zwischen den Segmenten und der Außenwalze für eine Druckwalze, die keine Stützsegmente aufweist. Es ist zu erkennen, dass das Vorsehen von Segmenten, im vorliegenden Fall in Form einer geschlitzten Hülse, deutlich effektiver ist als beispielsweise eine in der Außenwalze angeordnete zylinderförmige Hülse ohne Schlitze. Es ist zudem zu erkennen, dass die maximal erreichbare Dämpfung ein lokales Maximum durchläuft, im vorliegenden Fall beim ca. 100 Ns/nm. Da die Vorspannvorrichtung gemäß einer bevorzugten Ausführungsform einstellbar ist, das heißt, dass die Vorspannkraft variiert werden kann, kann die optimale Vorspannkraft in Vorversuchen ermittelt werden.

Figur 3b zeigt den Frequenzgang in Form der Nachgiebigkeit der Druckwalze 10 von der Frequenz f der Biegeschwingung. Es ist zu erkennen, dass eine um den Faktor 10 geringere Nachgiebigkeit in der Umgebung der Resonanzfrequenz erreichbar ist.

### Bezugszeichenliste

- 10: Druckwalze
- 12: Außenwalze
- 14: Vorspannvorrichtung
- 16: Permanentmagnet
- 18: Segment

- 20: Oberfläche
- 22: erstes Ende
- 24: zweites Ende
- 26: Hülse
- 28: Fußbereich

- 30: Spannring
- 32: Spanneinrichtung
- 34: Hydrodehnkissen
- 36: Innenzylinder
- 38: Druckquelle

- 40: Lager
- 42: zweite Hülse
- 44: Stützsegment

- L_{R}: Längsachse
- F: Vorspannkraft
- Fₐ: Auslenkkraft
- F_{r,1}: Reibkraft

## Patentansprüche

1. Druckwalze (10), insbesondere Flexodruck-Druckwalze, mit
(a) einer hohlen Außenwalze (12), die eine Längsachse (L) besitzt, und
(b) einer in der Außenwalze (12) angeordneten Vorspannvorrichtung (14) zum Ausüben einer Vorspannkraft (F), die eine radial auswärts gerichtete Kraftkomponente besitzt,
**gekennzeichnet durch**
(c) zumindest zwei Segmente (18), die
- sich entlang der Längsachse (L) erstrecken,
- untereinander in Umfangsrichtung entkoppelt sind,
- so angeordnet sind, dass eine Biegeschwingung der Druckwalze (10) zu einer Scherbewegung zwischen der Außenwalze (12) und den Segmenten (18) führt, und
- so mit der Außenwalze (12) verbunden sind, dass diese Scherbewegung zu einer die Biegeschwingung dämpfenden Kraft führt,
(d) wobei die Vorspannvorrichtung (14) angeordnet ist zum Ausüben der Vorspannkraft (F) auf die Segmente (18).

2. Druckwalze (10) nach Anspruch 1, **dadurch gekennzeichnet, dass** die Segmente (18) Teil einer geschlitzten Hülse (26) sind.

3. Druckwalze (10) nach einem der vorstehenden Ansprüche, **dadurch gekennzeichnet, dass**
die Segmente (18) aus Metall bestehen, insbesondere aus Stahl.

4. Druckwalze (10) nach einem der vorstehenden Ansprüche, **dadurch gekennzeichnet, dass** die Segmente (18) an einer Innenoberfläche (20) der Außenwalze (12) anliegen.

5. Druckwalze (10) nach einem der vorstehenden Ansprüche, **dadurch gekennzeichnet, dass** die Vorspannvorrichtung (14) Hydrodehnkissen (34) und/oder Magneten (16) aufweist.

6. Druckwalze (10) nach einem der vorstehenden Ansprüche, **dadurch gekennzeichnet, dass** die Segmente (18) sich über zumindest 80% einer axialen Länge (D) der Außenwalze (12) erstrecken.

7. Druckwalze (10) nach einem der vorstehenden Ansprüche, **gekennzeichnet durch**
mehrere Stützsegmente (44), wobei die Vorspannvorrichtung (14) eingerichtet ist zum Drücken der Stützsegmente (44) nach radial außen gegen die Segmente (18).

8. Flexodruckmaschine mit einer Druckwalze (10) nach einem der vorstehenden Ansprüche.

## Claims

1. Print roller (10), in particular a flexography print roller, with
(a) a hollow external roller (12) that has a longitudinal axis (L), and
(b) a pre-loading device (14) arranged in the external roller (12) for applying a pretension force (F) having a force component that is directed radially outwards,
**characterised by**
(c) at least two segments (18) which
- extend along the longitudinal axis (L),
- are decoupled from one another in the circumferential direction,
- are arranged such that a flexural vibration of the print roller (10) leads to a shear movement between the external roller (12) and the segments (18), and
- are connected to the external roller (12) such that this shear movement induces a force which dampens the flexural vibration,
(d) wherein the pre-loading device (14) is arranged to exert the pretension force (F) on the segments (18).

2. Print roller (10) according to claim 1, **characterised by** the fact that the segments (18) are part of a slotted sleeve (26).

3. Print roller (10) according to one of the above claims, **characterised by** the fact that
the segments (18) are made of metal, in particular steel.

4. Print roller (10) according to one of the above claims, **characterised by** the fact that the segments (18) lie flat on an inner surface (20) of the external roller (12).

5. Print roller (10) according to one of the above claims, **characterised by** the fact that the pre-loading device (14) comprises hydraulic expansion pads (34) and/or magnets (16).

6. Print roller (10) according to one of the above claims, **characterised by** the fact that the segments (18) extend across at least 80% of an axial length (D) of the external roller (12).

7. Print roller (10) according to one of the above claims, **characterised by** several support segments (44), wherein the pre-loading device (14) is configured to press the support segments (44) radially outwards against the segments (18).

8. Flexography print machine with a print roller (10) according to one of the above claims.

## Revendications

1. Rouleau d'impression (10), en particulier rouleau d'impression flexographique, comportant
(a) un rouleau extérieur creux (12) qui possède un axe longitudinal (L), et
(b) un dispositif de précontrainte (14) agencé dans le rouleau extérieur (12) pour exercer une force de précontrainte (F) qui possède une composante de force dirigée radialement vers l'extérieur,
**caractérisé par**
(c) au moins deux segments (18) qui
- s'étendent le long de l'axe longitudinal (L),
- sont découplés l'un de l'autre en direction périphérique,
- sont agencés de telle sorte qu'une vibration en flexion du rouleau d'impression (10) mène à un mouvement de cisaillement entre le rouleau extérieur (12) et les segments (18), et
- sont reliés au rouleau extérieur (12) de telle sorte que ce mouvement de cisaillement mène à une force amortissant la vibration en flexion,
(d) le dispositif de précontrainte (14) étant agencé pour exercer une force de précontrainte (F) sur les segments (18).

2. Rouleau d'impression (10) selon la revendication 1,
**caractérisé en ce que**
les segments (18) font partie d'une douille fendue (26).

3. Rouleau d'impression (10) selon l'une des revendications précédentes,
**caractérisé en ce que**
les segments (18) sont constitués en métal, en particulier en acier.

4. Rouleau d'impression (10) selon l'une des revendications précédentes,
**caractérisé en ce que**
les segments (18) sont en appui contre une surface intérieure (20) du rouleau extérieur (12).

5. Rouleau d'impression (10) selon l'une des revendications précédentes,
**caractérisé en ce que**
le dispositif de précontrainte (14) comprend des coussins d'expansion hydraulique (34) et/ou des aimants (16).

6. Rouleau d'impression (10) selon l'une des revendications précédentes,
**caractérisé en ce que**
les segments (18) s'étendent sur au moins 80 % d'une longueur axiale (D) du rouleau extérieur (12).

7. Rouleau d'impression (10) selon l'une des revendications précédentes,
**caractérisé par**
plusieurs segments de soutien (44), le dispositif de précontrainte (14) étant conçu pour presser les segments de soutien (44) radialement vers l'extérieur contre les segments (18).

8. Machine flexographique comportant un rouleau d'impression (10) selon l'une des revendications précédentes.
